# EUROPEAN PATENT APPLICATION

(11) **EP 4 617 812 A1**
(43) Date of publication of application: **17.09.2025**
(21) Application number: 24382256.6
(22) Date of filing: 11.03.2024
(51) Int. Cl.: G05D 1/224, G05D 1/248, B64F 1/00, G08G 5/00

(54) **AUTONOMOUS MEASUREMENT SYSTEM FOR AIRPORT RUNWAY CONDITIONS REPORT**

(71) Applicant: Aena S.M.E., S.A., 28042 Madrid (ES)
(72) Inventor: Gaviria Cardona, Jhon Jairo, Manises (ES); Arrondo Perals, Maria del Mar, Manises (ES)
(74) Representative: Pons IP

(57) **Abstract**

The present invention discloses an autonomous ground vehicle that measures critical parameters on runways such as contaminants, temperature, dew point, etc., and with these parameters, creates a runway condition report (RCR) to transmit it to the pilots, who in turn use it to configure the aircraft, thereby guaranteeing a safe landing. The system comprises a vehicle, a measurement module installed in the vehicle, remotely connected to the ground station comprising the use of sensors and a remote control device to control the vehicle.

## Description

### OBJECT OF THE INVENTION

The invention relates to the field of aviation safety, and more specifically, to a system for providing greater safety during landing, on an airport runway, by measuring, monitoring, managing and controlling runway conditions.

The object of this invention is a measurement system comprising an autonomous ground vehicle that measures critical parameters on runways such as contaminants (water, snow, slush, ice or frost), temperature, dew point, among others, and with these parameters, a Runway Condition Report (RCR) is created to transmit it to the pilots, who in turn use it to configure the aircraft according to the manufacturer's specifications and calculate the distance required to stop the aircraft under current runway conditions. In addition to being essential for pilots in the landing phase, these data also serve airport authorities to make immediate decisions that guarantee the operational continuity of the airport.

### BACKGROUND OF THE INVENTION

Assessment and reporting of the condition of an airport movement area is required to provide flight crews with the information required for safe aircraft operation.

Given the mandatory compliance with European regulations regarding the capturing, recording and broadcasting of runway condition parameters, airport managers are committed to the development of new technologies that facilitate said work, which can be summarised in a method that begins with the capture of information in the field, then the evaluation of the runway and assignment of RWYCC (Runway Condition Code), which is one of the elements of the Runway Condition Report (RCR). After this evaluation, an RCR message is prepared and coordination is carried out for the broadcasting of the RCR message to ATS (Air traffic services), which are air traffic services that transmit the information received through the RCR and/or special air notifications to end users and also to AIS (Aeronautical information services) which is aeronautical information services, who provides the information received in the RCR to end users.

The method of the Runway Condition Report (RCR), or RCR reportresponds to this need and allows said evaluated information to be reported in a standardised way.

According to the current regulations, the airport operator must evaluate the condition of the runway surface in operation, as well as the presence of contaminants such as water, snow, slush, ice or frost. Based on this information, a runway condition key is reported, indicating the braking capability on the runway based on surface conditions and a description of the runway surface condition. With the above data, the RCR report is prepared and published. Monitoring of the condition of the runway must be permanent so that significant changes in its condition are detected and a new RCR report is generated to broadcast its new situation. The information thus notified is used by the crew, based on the features provided by the aircraft manufacturer, to calculate the distance required to stop the aircraft under current conditions and achieve the optimal performance of all the systems.

Current investments are being directed at improving the security of airport traffic control systems. However, there remains a need in the art for an autonomous runway review and evaluation system.

### DESCRIPTION OF THE INVENTION

The measurement system of airport runway parameters proposed by the following invention is made up of an autonomous radio controlled vehicle, which comprises a control unit, which, in turn, is made up of a radio control station, a radio control receiver and a control unit, with which the manual or autonomous positioning of the vehicle and its tracking are carried out, based on the position data of the GPS, installed therein. The vehicle can be tracked and its trajectory modified from the same radio control station and/or a ground station.

Another part of this invention is the measurement equipment installed in the vehicle, connected remotely through a mobile phone (Mobile Transmitter) with a server in the cloud (Central Server), which in turn incorporates a sensor for friction measurement, a sensor for measuring dew point, a sensor for measuring the water/ice layer of the runway, a sensor for measuring humidity, and two sensors for measuring temperature, one for ambient temperature and another for runway temperature. A mobile transmitter, which transmits in real time, the data captured by the sensors of the measurement module as the vehicle circulates on the airport runway, to the central server in the cloud, which incorporates data processing means, and generates, based on the measurements obtained, a code related to runway conditions.

Said data will be available to airport managers immediately after the route of the vehicle has ended. The managers, in turn, are responsible for transmitting said code to the aircraft crew.

The vehicle of the system of the present invention has sufficient size and power to carry out complete routes of up to 10 km (round trip along the entire runway), with all its equipment installed, which includes the movement system, the measurement module, the control module and all the auxiliary equipment.

The movement system consists of a brushless electric motor, connected to a variable speed drive, which is powered by lithium batteries, which gives it great power and autonomy.

The control unit is based on a Pixhawk^{®} card, which, together with the GPS (Global Positioning System) and the receiver, is responsible for managing the manual and autonomous positioning of the vehicle, controlling steering and engine power, and transmit positioning data, video and route data, both to the radio control station and to the ground station.

The ground station is a control centre with a computer and auxiliary equipment, where the route of the vehicles can be tracked and sensor measurements monitored (through the ViewMondo page), as well as sending commands to the vehicle through the remote control device, being able to modify the routes or abort them in the event of operational requirements.

The measurement module is configured to measure various parameters of an airport runway, such as temperature, humidity, water/snow lamination levels, dew and friction point, these being essential in the landing phase and for airport authorities at the time of making immediate decisions that guarantee airport operation, according to the environmental conditions of the runway in use. The measurement module additionally comprises an external battery and a LED light that functions as a status indicator of the measurement equipment, indicating connection to the transmission device and possible errors.

Additionally, a camera is incorporated into the vehicle, which is linked to the radio control receiver, with which, through the station's own screen, or in the ground station, the vehicle's route along the airport runway is displayed, being able to manage it remotely, without having to be present on site.

The GPS of the system of the present invention additionally comprises an RTK (Real Time Kinematic) system which is a highly precise kinetic satellite navigation. The GPS with its RTK system allows the user and the control unit (6) to maintain the position of the vehicle at all times with an accuracy of up to 2 cm.

The system also has security options that mean that, in the event of equipment failure, measures are adopted such as the autonomous return of the vehicle to the starting point or the immediate stopping of the route in cases of loss of GPS signal, as well as warnings for low battery level, collision, etc.

Additionally, an obstacle detection system is incorporated into the vehicle, so that the vehicle can perform evasive manoeuvres and avoid collisions autonomously.

Equipment such as the measurement module, camera, etc., are installed in the vehicle using connecting parts manufactured to be compatible with the vehicle and the equipment used.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows a perspective view of the vehicle of the present invention.
Figure 2 shows a block diagram of a number of components of the system of the present invention.
Figure 3 shows a screen shot comprising a number of parameter measurement values of an airport runway.

### PREFERRED EMBODIMENT OF THE INVENTION

In an embodiment of the present invention, the measurement system of airport runway parameters comprises a central server (8) that operates in the cloud, a measurement module (2) installed in the vehicle (1), remotely connected to the central server (8), which comprises a sensor that measures friction, a dew point sensor, a sensor that measures the thickness of the water/ice layer of the runway, a sensor that measures the humidity of the airport runway, two temperature sensors that measure the ambient temperature and that of the airport runway, a transmitter (7) that transmits the data captured by the sensors of the measurement module (2) in real time to the central server (8) that incorporates means for processing the data, which receives in real time and generates a code related to runway conditions, a radio-controlled and autonomous vehicle (1), comprising a control unit (3) that incorporates a radio control station (4), a radio control receiver (5) associated with the radio control station (4) by radio frequency and a control module (6) linked to the radio control receiver (5) by physical cable and that performs the control of manual or autonomous position of the vehicle (1) and the transmission of position, video and data of the route of the vehicle (1), and the radio control station (4) processes the commands and executes them when acting manually, at least one GPS that allows recording the position of the vehicle (1) from a ground station (9) and/or from the same radio control station (4).

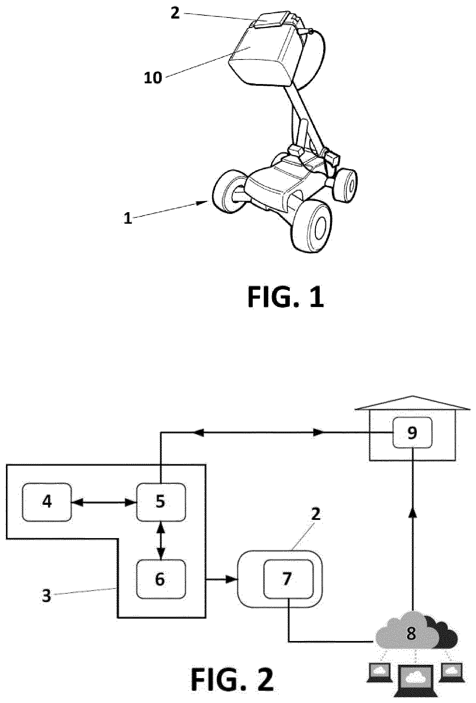

Figure 1 shows the vehicle (1) of the present invention, wherein the measurement module (2) and the camera (10) are installed in the vehicle (1). The camera (10) is linked to the radio control receiver (5) where, through the same screen of the radio control station (4) or a screen of the remote station (9) the route of the vehicle (1) is displayed.

According to the present invention, the vehicle (1) additionally has an autopilot system incorporated into the control module (6) and based on a Pixhawk^{®} cube card, and software to program the control module (6), for example, the ARDUPILOT^{®} software is an open source autopilot program package for unmanned vehicles, capable of controlling them autonomously.

Figure 2 also shows that the measurement equipment (2) is connected to the central server (8), through the transmitter (7), which receives data from the sensors of the measurement module (2) in real time. The vehicle (1) can be controlled through the radio control receiver (5) and/or the ground station (9).

In addition, the vehicle (1) has a radio control receiver (5), integrated with the control unit (3), the software to program the control unit (6) and the radio control station (4) with which and based on the GPS data, a manual or autonomous position control of the vehicle (1) can be carried out, and the vehicle (1) and all its parameters can be monitored in real time, being able to view it both on a Google Maps map and on any other applications with the same purpose.

According to the embodiment of the present invention, first, a number of specific GPS points on the airport runway are recorded on the Pixhawk^{®} card, to send the vehicle (1) to these points, and the speed of the vehicle (1) between points is only programmed once. A measurement module management software (2) is also configured, for example, the ViewMondo^{®} program with the geostationary data of the airport runway, dividing the runway into three, to obtain the RCR report, according to airport security regulations and current air navigation. Afterwards, the system of the invention is put into operation. A mobile phone is used to transmit data from the measurement module (2) to the central server (8).

In the radio control station (4), the Qground ^{®} APP (position control program) is loaded and the system of the present invention is put into automatic mode, first verifying that all components of the system work and the GPS are correctly activated. At this moment, the ground station (9) is activated, (in the event of tracking from said ground station (9)). Immediately the automatic mode is activated that allows the vehicle (1) to self-operate, the vehicle (1) looks for its first point, and once it reaches that point, it continues towards the second point and so on until the end of the route. Then, the ViewMondo^{®} web application is opened to obtain the measurements and extract the RCR report that will be available immediately once the vehicle (1) finishes its route. These data are immediately transmitted to the pilots so that they can optimise the landing manoeuvre of the aircraft, guaranteeing safer and more reliable landings, and also to the airport authorities so that they can make immediate decisions that guarantee airport operation, according to the environmental conditions of the airport runway in use.

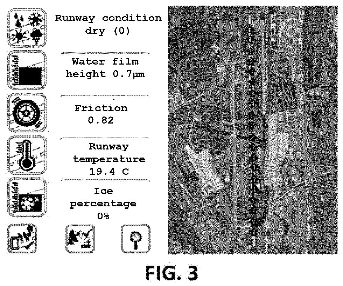

Fig. 3 shows a screenshot comprising several parameter measurements of an airport runway.

## Claims

1. A system for measuring airport runway parameters, **characterised in that** it comprises:
- a central server (8) that operates in the cloud,
- a measurement module (2) installed in the vehicle (1), remotely connected to the central server (8), which comprises:
a sensor that measures friction,
a dew point sensor,
a sensor that measures the thickness of the water/ice layer of the runway,
a sensor that measures the humidity of the airport runway,
two temperature sensors that measure the ambient temperature and
that of the airport runway,
a transmitter (7) that transmits the data captured by the sensors of the measurement module (2) in real time to the central server (8) that incorporates means for processing the data, which receives in real time and generates a code related to runway conditions,
- a radio controlled and autonomous vehicle (1), comprising a control unit (3) that incorporates a radio control station (4), a radio control receiver (5) associated with the radio control station (4) by radio frequency and a control module (6) linked to the radio control receiver (5) by physical cable and that performs manual or autonomous position control of the vehicle (1) and transmission of position, video and data of the route of the vehicle (1), and processes the commands from the radio control station (4) and executes them when operating in manual mode,
- at least one GPS that allows the position of the vehicle (1) to be recorded from a ground station (9) and/or from the radio control station (4).

2. The system of claim 1, wherein the vehicle (1) additionally comprises a camera (10) installed in the vehicle (1) that is linked to the radio control receiver (5) where, through the same screen of the radio control station (4) or a remote station screen (9) the route of the vehicle (1) is displayed.
